(19) Europäisches Patentamt European Patent Office Office européen des brevets

(11) **EP 2 999 260 B1**

(12) **EUROPEAN PATENT SPECIFICATION**

(45) Date of publication and mention
of the grant of the patent:
**29.08.2018 Bulletin 2018/35**

(51) Int Cl.:
*H04W 28/08* (2009.01)    *H04N 21/218* (2011.01)
*H04N 21/24* (2011.01)    *H04N 21/242* (2011.01)
*H04N 21/433* (2011.01)    *H04N 21/442* (2011.01)
*H04N 21/6377* (2011.01)

(21) Application number: **13889283.1**

(22) Date of filing: **08.07.2013**

(86) International application number:
**PCT/CN2013/079003**

(87) International publication number:
**WO 2015/003302 (15.01.2015 Gazette 2015/02)**

(54) **CONTROL METHOD, DEVICE AND SYSTEM FOR VIDEO PLAYING**

STEUERUNGSVERFAHREN, -VORRICHTUNG UND -SYSTEM FÜR VIDEOSPIELE

PROCÉDÉ, DISPOSITIF ET SYSTÈME DE COMMANDE POUR LECTURE VIDÉO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.03.2016 Bulletin 2016/12**

(73) Proprietor: **Huawei Technologies Co., Ltd.
Longgang District
Shenzhen, Guangdong 518129 (CN)**

(72) Inventors:
• **WANG, Shuai
Shenzhen
Guangdong 518129 (CN)**
• **WANG, Feng
Shenzhen
Guangdong 518129 (CN)**

(74) Representative: **Maiwald Patent- und
Rechtsanwaltsgesellschaft mbH
Elisenhof
Elisenstraße 3
80335 München (DE)**

(56) References cited:
WO-A2-2006/127391     CN-A- 101 330 340
CN-A- 101 888 664     CN-A- 103 024 827
JP-A- 2005 294 941     US-A1- 2005 033 879
US-A1- 2005 120 038     US-A1- 2010 333 148

• **Brian K Schmidt: "AN ARCHITECTURE FOR
DISTRIBUTED, INTERACTIVE, MULTI-STREAM,
MULTI-PARTICIPANT AUDIO AND VIDEO", , 19
April 1999 (1999-04-19), XP055266354, Retrieved
from the Internet:
URL:http://i.stanford.edu/pub/cstr/reports
/csl/tr/99/781/CSL-TR-99-781.ps [retrieved on
2016-04-18]**
• **CHIA-HUI WANG ET AL: "A Control-Theoretic
Mechanism for Rate-based Flow Control of
Real-time Multimedia Communication",
PROCEEDINGS OF THE WSEAS
INTERNATIONAL CONFERENCE ON
MULTIMEDIA,INTERNET AND VIDEO
TECHNOLOGIES, XX, XX , 1 September 2001
(2001-09-01), pages 1-6, XP002530450, Retrieved
from the Internet:
URL:http://www.iis.sinica.edu.tw/papers/ho
ho/121-F.pdf [retrieved on 2009-06-03]**

**Description**

## TECHNICAL FIELD

Embodiments of the present invention relate to the field of video surveillance services, and in particular, to a method, a device, and a system for controlling video play.

## BACKGROUND

In recent years, to improve public security, a video surveillance system is generally deployed to perform surveillance and recording on a public area. For some important areas, such as an airport, a bank, a crossroad, multiple peripherals (which are generally cameras) are disposed in multiple locations to perform multi-angle surveillance on a same location, to further improve security. When an unusual situation occurs, to learn about key information about a crime scene within a particular time period, criminal investigators or security personnel usually need to synchronously play back, observe, and analyze multiple recordings, to provide more valuable clues for dealing with the unusual situation.

In the prior art, multiple videos are synchronously played back on a same client. An interface of a display is divided into several windows, such as 4, 8, or more, and the multiple videos are displayed in different windows. In this case, multiple persons are required to watch the different windows of the display at the same time at a same place, The inventor finds that this method has the following disadvantages: (1) a larger quantity of windows into which an interface of a display is divided indicates a smaller image in a window, and details of an image even cannot be identified; as a result, accuracy of observation and analysis is affected; (2) because a size and resolution of a display are limited, collaboration of more persons cannot be implemented, and a requirement that multiple persons collaboratively access and watch a video cannot be satisfied; (3) when a case needs to be jointly dealt with at multiple places, the existing solution cannot implement a requirement that multiple persons collaboratively access and watch a video at multiple places.

The document "An architecture for distributed, interactive, multi-stream, multi-participant audio and video" from Brian K. Schmidt (19th April 1999) discloses a system architecture for distributing multiple streams of audio and video across a network to multiple participants who interact with the media at a fine-grained level and to utilize an application for viewing multi-viewpoint audio and video as the test case for the proposed system architecture. In this case, an array of cameras is used to capture numerous streams of video, providing multiple slightly displaced viewpoints from which a scene is observed. This generates a series of audio and video streams, which are then digitized, compressed, aggregated, and packetized for transmission across a network. The system design supports multiple participants simultaneously observing the scene from potentially different viewpoints. Interaction is supported in the form of perspective changes.

## SUMMARY

Objectives of embodiments of the present invention are to provide a method, a device, and a system for controlling video play that can synchronously play back multiple surveillance videos on multiple clients.

The present invention is defined in the independent claims. Preferred embodiments are defined in the dependent claims.

Beneficial effects of the present invention are as follows: a video play control unit of a video surveillance platform is used to uniformly control synchronous playback of multiple videos on multiple clients, so that mutual collaboration between multiple places and multiple clients can be achieved, enabling multiple observers to conveniently watch multiple videos of a same time period on different clients. In this way, it can be implemented that video information of a crime scene from multiple cameras can be synchronously played and collaboratively accessed and watched on multiple clients, so that key information of a case can be quickly learned, thereby improving case-solving efficiency.

## BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1 is a schematic diagram of an architecture of a video surveillance system according to an embodiment of the present invention;
FIG. 2 is a schematic diagram of composition of a video play control unit according to an embodiment of the present invention;

FIG. 3 is a flowchart of a method for controlling video play according to an embodiment of the present invention;

FIG. 4a and FIG. 4b are schematic diagrams of an interface of a client according to an embodiment of the present invention;

FIG. 5 is a flowchart of a first embodiment of the present invention;

FIG. 6 is a flowchart of a second embodiment of the present invention;

FIG. 7 is a flowchart of a third embodiment of the present invention;

FIG. 8 is a flowchart of a fourth embodiment of the present invention;

FIG. 9 is a flowchart of a fifth embodiment of the present invention;

FIG. 10 is a flowchart of a sixth embodiment of the present invention;

FIG. 11 is a flowchart of a seventh embodiment of the present invention;

FIG. 12 is a flowchart of an eighth embodiment of the present invention; and

FIG. 13 is a schematic diagram of an architecture of an embodiment of a video surveillance platform according to the present invention.

## DESCRIPTION OF EMBODIMENTS

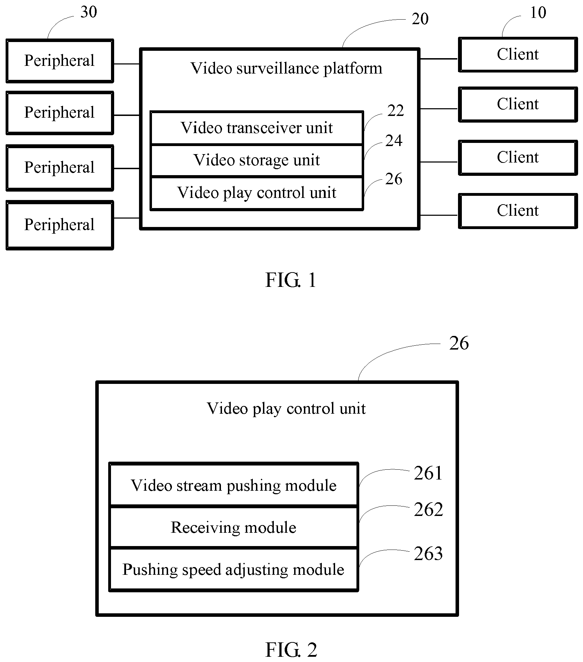

Referring to FIG. 1, FIG. 1 is a schematic diagram of an architecture of a video surveillance system according to an embodiment of the present invention, where the video surveillance system includes clients 10, a video surveillance platform 20, and peripherals 30.

A client 10 is a specific physical device or a virtual device that has a function of a client, and mainly implements a function for surveillance personnel to watch a surveillance video, and generally, there are multiple clients 10. A client 10 may be a PC client or a mobile client, such as a mobile device like a mobile phone, a Pad, or a MediaPad.

The video surveillance platform 20 implements communication with the clients 10 and the peripherals 30 by using a wired network in which a coaxial cable or an optical fiber is used, or a wireless network in which Bluetooth, infrared, WiFi, GPRS, or LTE is used. The video surveillance platform 20 generally includes: a video transceiver unit 22, configured to receive a video stream sent by a peripheral 30; a video storage unit 24, configured to store the video stream received by the video transceiver unit 22; and a video play control unit 26, configured to control a video stream pushed to a client 10.

According to different application scenarios, the video play control unit 26 may be a physical device disposed independently in the video surveillance system, may be integrated as a functional unit into the existing video surveillance platform 20, or may be integrated on a client 10 as required. That the video play control unit 26 is integrated into the existing video surveillance platform 20 is described in this embodiment of the present invention.

Referring to FIG. 2, FIG. 2 is a schematic diagram of composition of the video play control unit 26 according to this embodiment of the present invention, where the video play control unit 26 includes:

a video stream pushing module 261, configured to separately push one or more video streams of a same time period to multiple clients in an observation group; a receiving module 262, configured to receive receiving speeds at which the clients receive the one or more video streams, and a cache value or cache values of the one or more video streams, where the receiving speeds and the cache value or the cache values of the one or more video streams are sent by the multiple clients to the video play control unit of the video surveillance platform regularly; and a pushing speed adjusting module 263, configured to adjust a pushing speed or pushing speeds of the one or more video streams according to the received receiving speeds of the clients and the received cache value or cache values of the one or more video streams, where the video stream pushing module 261 is further configured to push, according to an adjusted pushing speed or adjusted pushing speeds, the one or more video streams to the clients 10 for the clients 10 to play.

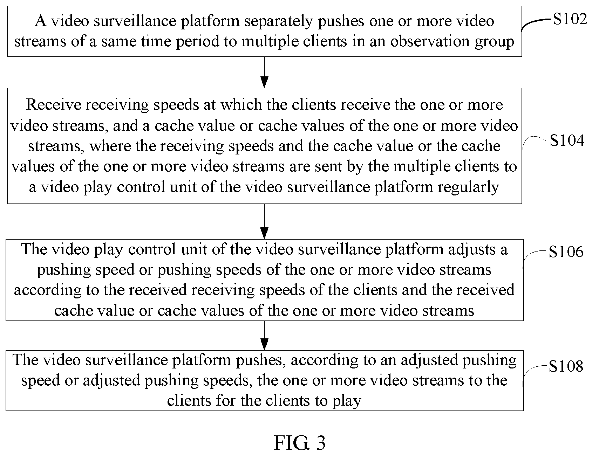

Referring to FIG. 3, FIG. 3 is a flowchart of a method for controlling video play according to an embodiment of the present invention, where the method includes the following steps:

S102. A video surveillance platform separately pushes one or more video streams of a same time period to multiple clients in an observation group.

S104. Receive receiving speeds at which the clients receive the one or more video streams, and a cache value or cache values of the one or more video streams, where the receiving speeds and the cache value or the cache values of the one or more video streams are sent by the multiple clients to a video play control unit of the video surveillance platform regularly.

S106. The video play control unit of the video surveillance platform adjusts a pushing speed or pushing speeds of the one or more video streams according to the received receiving speeds of the clients and the received cache value or cache values of the one or more video streams; step S106 is specifically:

(a) when a received cache value $C_i$ of the ith video stream in a cache of a client to which the ith video stream belongs is 0, notifying the other clients to stop playing, and stopping pushing another video stream other than the ith video stream, and

if a current playing speed of the client to which the ith video stream belongs is $n*V_p$, and a pushing speed of the ith video stream is $V_i$, adjusting the pushing speed of the ith video stream to:

$$V_i + C_{min} \div \Delta T,$$

so that after a time period of $\Delta T$, a cache value of the ith video stream is greater than $C_{min}$; or

(b) when a current cache value $C_i$ of the ith playback video stream meets $0 < C_i < C_{min}$:

assuming that a current playing speed is $n*V_p$, and that the current pushing speed of the ith video stream is $V_i$, adjusting the pushing speed at which the video surveillance platform pushes the ith playback video stream to:

$$V_i + [C_m - (V_i - n*V_p)*\Delta T - C_i]/\Delta T,$$

where $C_m = (C_{min} + C_{max})/2$,

so that after a time period of $\Delta T$, the cache value of the ith video stream is greater than $C_{min}$; or

(c) when a current cache value $C_i$ of the ith playback video stream meets $C_{min} < C_i < C_{max}$:

determining a current video playing speed, which is assumed to be $n*V_p$, and if the current pushing speed of the ith video stream $V_i$ meets $V_i = n*V_p$, maintaining the current pushing speed, and if $V_i \neq n*V_p$, adjusting the current pushing speed to $n*V_p$; or

(d) when a current cache value $C_i$ of the ith playback video stream meets $C_{max} < C_i < C_{total}$:

assuming that a current playing speed is $n*V_p$, and that the current pushing speed of the ith video stream is $V_i$, adjusting the pushing speed at which the video surveillance platform pushes the ith playback video stream to:

$$V_i + [C_m - (V_i - n*V_p)*\Delta T - C_i]/\Delta T,$$

where $C_m = (C_{min} + C_{max})/2$,

so that after a time period of $\Delta T$, the cache value of the ith video stream is less than $C_{max}$; or

(e) when a current cache value $C_i$ of the ith playback video stream meets $C_i = C_{total}$:

suspending pushing of the ith video stream, where

$C_{total}$ is a size of a buffer that is allocated for each playback video stream by each client in the observation group; $C_i$ indicates a current cache value of the ith playback video stream; $C_{max}$ is an upper alarm limit; $C_{min}$ is a lower alarm limit, and $0 < C_{min} < C_{max} < C_{total}$; $\Delta T$ is generally at a millisecond scale, for example, ranging from 10 milliseconds to 200 milliseconds, and may be selected and determined according to system performance and a system requirement; and n may be a natural number or a fraction, such as 1/4, 1/2, 2, or 4. After a preset time period of synchronous playback, each client feeds back a current cache value of each playback video stream on each client to the video play control unit. Then, a feedback is initiated at an interval of a time period of $\Delta T$. The video play control unit notifies, according to received feedback information, the video surveillance platform to adjust a pushing speed of each video stream, to implement synchronous control.

S108. The video surveillance platform pushes, according to an adjusted pushing speed or adjusted pushing speeds, the one or more video streams to the clients for the clients to play. During a playing process, all members in the observation group have a same time axis, and the time axis is approximately in a same progress. An administrator may re-allocate a video to collaboratively analyze some important videos. During a synchronous-play process, a member in the observation group may choose to perform real-time text or voice communication.

Optionally, before step S102, the method further includes:

Step S101. The video surveillance platform creates the observation group for the multiple clients. Specifically, step S101 is:

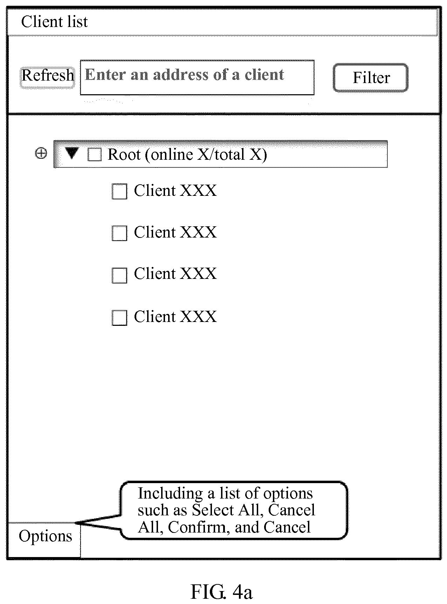

after logging into a client, a user may select an online client, and an interface for selecting a client is shown in FIG. 4a.

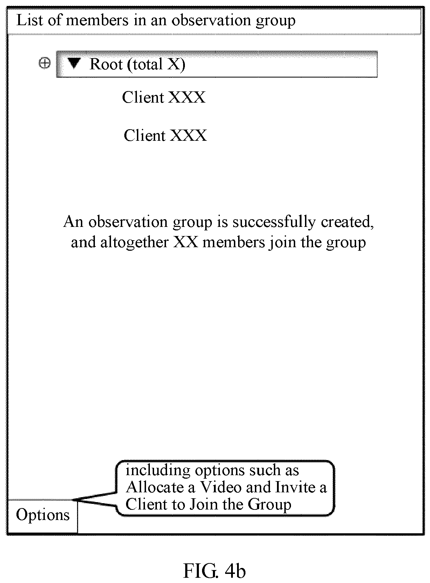

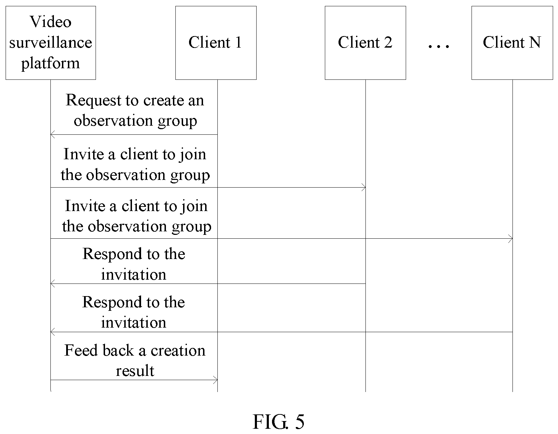

The observation group may also be created by inviting a particular client to join the observation group by using a client IP address. As shown in FIG. 5, when a manner of creating the observation group by the video surveillance platform is used, a request for creating an observation group is initiated by a client 1; after receiving the request for creating the observation group, the video surveillance platform acquires a client list, and feeds back media capabilities (bandwidth, CPU, memory, and decoding capabilities, and the like) of a client in the list, and the creator client 1 selects, according to the client list and the media capabilities fed back by the video surveillance platform, a client to join the observation group. After receiving a message from the video surveillance platform, an invited client may choose whether to accept the invitation. If the invited client chooses to accept the invitation, the invited client joins the observation group. If the invited client declines the invitation or does not deal with the invitation information in a long time, it is assumed that the invited client declines to join the observation group. To further improve user experience, the video surveillance platform may feed back, to the client 1 that applies for creating the observation group, a creation result, such as information about a quantity of clients that join the observation group, and a quantity of clients that do not join the observation group. The interface of the client is shown in FIG. 4b.

In addition, during a synchronous-play process, a president may regularly acquire media capabilities (bandwidth, CPU, memory, and decoding capabilities) of each member in the observation group, and if a significant decrease in media capabilities of a client is detected, a quantity of videos played on the client may be reduced or the client may be removed, thereby generating an additional video. The video is entrusted to the president, and can be re-allocated to another observer by the president.

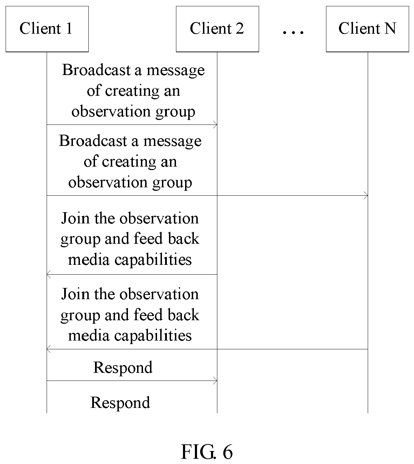

As shown in FIG. 6, the observation group may also be created in a manner in which a user broadcasts, by using a client, a message of creating the observation group to a local network, and another client that receives the message in the local network may choose to join the observation group.

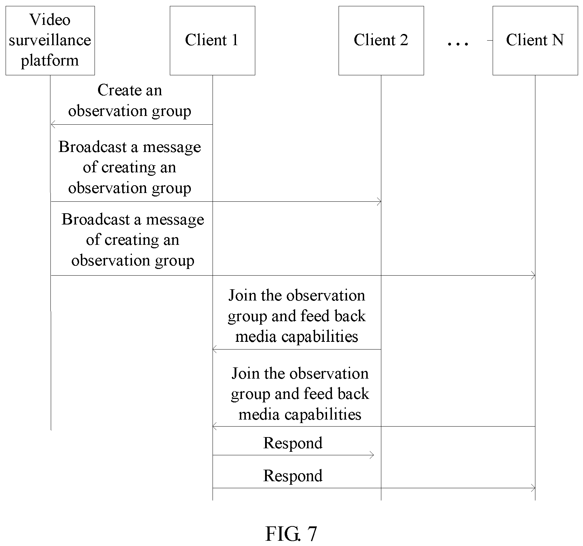

As shown in FIG. 7, the observation group may also be created in a manner in which a user sends, by using a client, a request message of creating the observation group to the video surveillance platform, the video surveillance platform sends a message to each client, and after receiving a message of the video surveillance platform, another client may choose to join the observation group.

A manner of controlling permission of the observation group is specifically as follows:

the administrator has permission to add and delete a member of the observation group, select one or more videos that are to be observed, and allocate the selected one or more to-be-observed videos to each member;

the president has permission to control all synchronously-played videos in the observation group to be uniformly played; and

the secondary observer has permission to control video play on a local client.

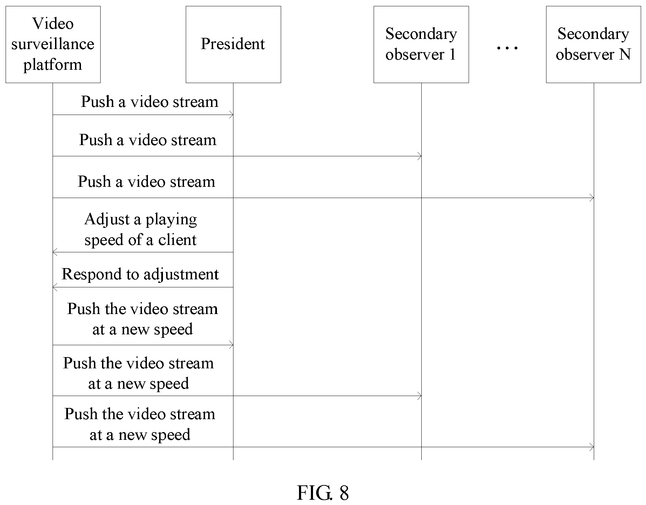

Optionally, after step S108, the method further includes step S109. As shown in FIG. 8, the video surveillance platform pushes a video stream at an initial speed V0 to each member in the observation group; during a playing process of a client, the president of the observation group adjusts a playing speed of the client, for example, to 1/2 or 4 times of Vp, the video play control unit of the video surveillance platform correspondingly adjusts a video stream playing speed of another client in the observation group.

In addition, optionally, each member in the observation group may set a following strategy for a synchronous-play process to "play first" or "synchronization first".

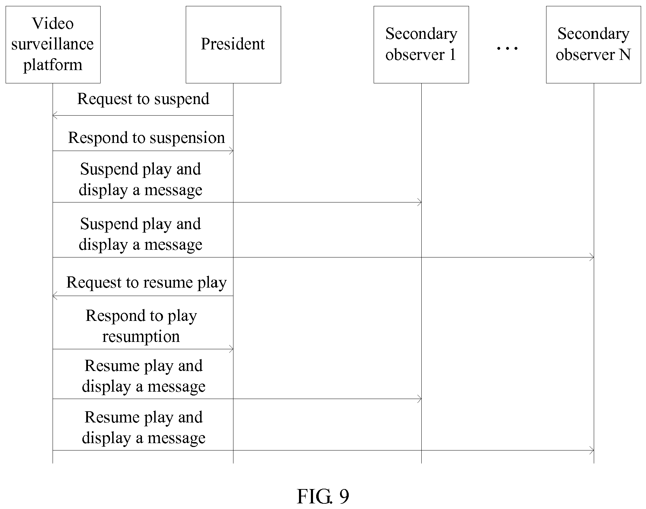

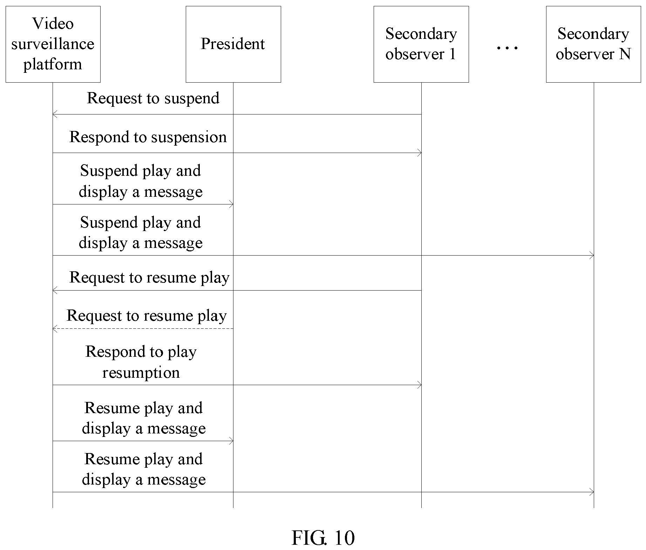

The "synchronization first" strategy is specifically as follows: as shown in FIG. 9, after the president chooses to uniformly perform a suspension operation on each video in the observation group, video play of all members are suspended, and each member receives a message indicating that "a particular president performs a suspension operation on a particular video". In this case, only the president can resume synchronous play of the videos, and the other members cannot perform this operation. As shown in FIG. 10, after a secondary observer 1 performs a suspension operation, video play of another secondary observer is suspended, and the another secondary observer receives a message indicating that "a particular member performs a suspension operation on a particular video". In this case, only the president and the secondary observer 1 that performs the suspension operation can resume synchronous play of the videos, and the other members cannot perform this operation.

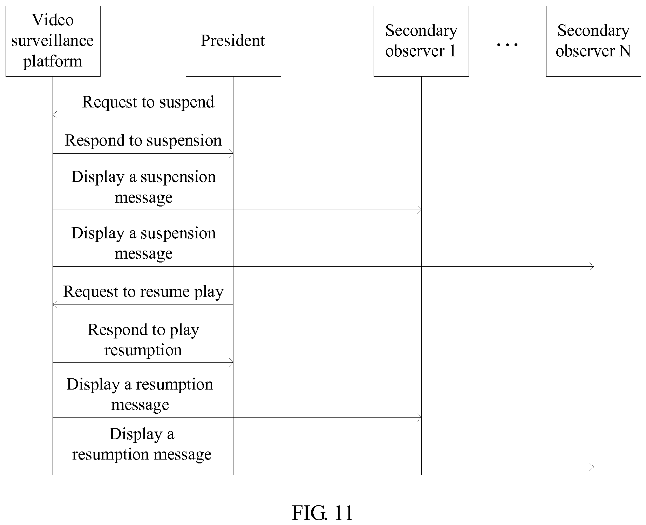

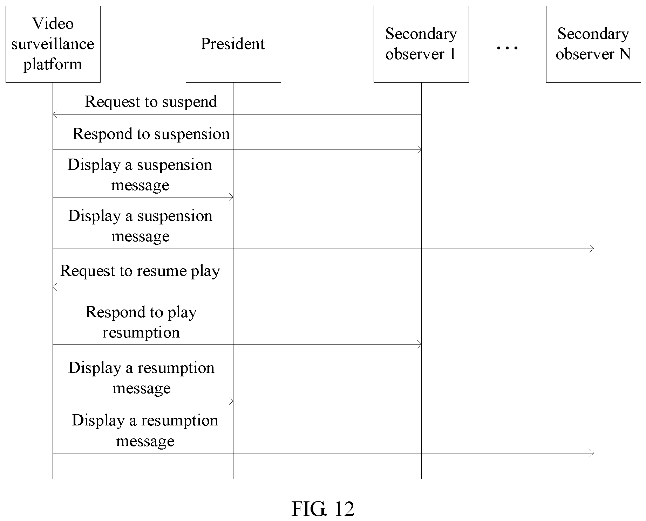

The "play first" strategy is specifically as follows: as shown in FIG. 11, after the president chooses to uniformly perform a suspension operation on each video in the observation group, the video surveillance platform notifies all members in the observation group to suspend video play, and sends, to each member in the observation group, a suspending message indicating that "a particular president performs a suspension operation on a particular video". In this case, only the president can resume synchronous play of the videos, and the other members cannot perform this operation. As shown in FIG. 12, after a secondary observer 1 selects to perform a suspension operation on a video on a local client, another secondary observer receives a message indicating that "a particular member performs a suspension operation on a particular video"; however, a suspension operation is not performed on video play of another secondary observer. When resuming playing the suspended video, the secondary observer 1 that performs the suspension operation may be directly redirected to a current synchronous-play time point, or may choose to fast forward at 2x or 4x to a current synchronous-play time point.

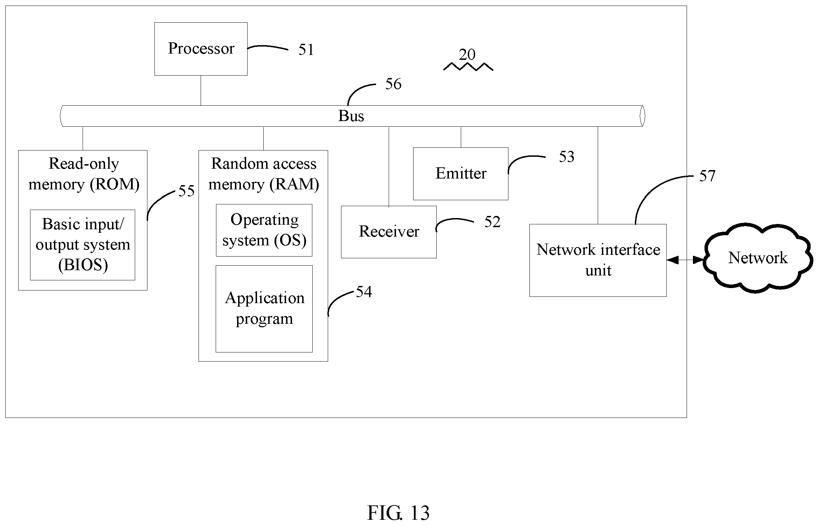

Referring to FIG. 13, FIG. 13 is a schematic structural diagram of an embodiment of a video surveillance platform according to the present invention. The video surveillance platform 20 includes a processor 51, a receiver 52, an emitter 53, a random access memory 54, a read-only memory 55, a bus 56, and a network interface unit 57, where the processor 51 is separately coupled to the receiver 52, the emitter 53, the random access memory 54, the read-only memory 55, and the network interface unit 57 by using the bus 56. When required to run, the video surveillance platform is started up by using a basic input/output system integrated in the read-only memory 55 or a bootloader boot system in an embedded system, to boot the video surveillance platform to enter a normal running state. After the video surveillance platform enters the normal running state, an application program and an operating system are run in the random access memory 54, to receive data from a network or send data to the network, so that:

the receiver 52 is configured to receive receiving speeds at which clients receive one or more video streams, and a cache value or cache values of the one or more video streams, where the receiving speeds and the cache value or the cache values of the one or more video streams are sent by the multiple clients to a video play control unit of the video surveillance platform regularly;

the processor 51 is configured to adjust a pushing speed or pushing speeds of the one or more video streams according to the received receiving speeds of the clients and the received cache value or cache values of the one or more video streams; and

the emitter 53 is configured to push, according to an adjusted pushing speed or adjusted pushing speeds, the one or more video streams to the clients for the clients to play.

In this embodiment, the processor 51 may be a central processing unit (CPU), or an application-specific integrated circuit ASIC (Application Specific Integrated Circuit), or be configured to one or more integrated circuits that implement the embodiments of the present application.

In the foregoing technical solutions, a video play control unit of a video surveillance platform is used to uniformly control synchronous playback of multiple videos on multiple clients, so that mutual collaboration between multiple places and multiple clients can be achieved, enabling multiple observers to conveniently watch multiple videos of a same time period on different clients. In this way, it can be implemented that video information of a crime scene from multiple cameras can be synchronously played and collaboratively accessed and watched on multiple clients, so that key information of a case can be quickly learned, thereby improving case-solving efficiency.

In the several implementation manners provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the implementation manners.

In addition, functional units in the embodiments of the present application may be integrated into one processing unit, or each of the units may exist alone physically, or two or more units are integrated into one unit. The integrated unit may be implemented in a form of hardware or in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or some of the technical solutions may be implemented in the form of a software product. The software product is stored in a storage medium and includes several instructions for instructing a computer device (which may be a personal computer, a server, or a network device) or a processor to perform all or some of the steps of the methods described in the embodiments of the present application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely embodiments of the present application, and are not intended to limit the scope of the present application. An equivalent structural or equivalent process alternation made by using the content of the specification and drawings of the present application, or an application of the content of the specification and drawings directly or indirectly to another related technical field, shall fall within the protection scope of the present application.

**Claims**

1. A method for controlling video play, comprising:

separately pushing, by a video surveillance platform, one or more video streams of a same time period to multiple clients in an observation group (S102);
receiving playing speeds at which the clients play the one or more video streams, and a cache value or cache values of the one or more video streams, wherein the playing speeds and the cache value or the cache values of the one or more video streams are sent by the multiple clients to a video play control unit of the video surveillance platform regularly (S104);
adjusting, by the video play control unit of the video surveillance platform, a pushing speed or pushing speeds of the one or more video streams according to the received playing speeds of the clients and the received cache value or cache values of the one or more video streams (S106);
specifically:

(a) when a received cache value $C_i$ of the ith video stream in a cache of a client to which the ith video stream belongs is 0, notifying the other clients to stop playing, and stopping pushing another video stream other than the ith video stream, and
if a current playing speed of the client to which the ith video stream belongs is $n*V_p$, and a pushing speed of the ith video stream is Vi, adjusting the pushing speed of the ith video stream to:

$$V_i + C_{min} \div \Delta T,$$

so that after a time period of $\Delta T$, a cache value of the ith video stream is greater than $C_{min}$; or
(b) when a current cache value $C_i$ of the ith playback video stream meets $0 < Ci < C_{min}$:

assuming that a current playing speed is $n*V_p$, and that the current pushing speed of the ith video stream is Vi, adjusting the pushing speed at which the video surveillance platform pushes the ith playback video stream to:

$$V_i + [C_m - (V_i - n*V_p)*\Delta T - C_i]/\Delta T,$$

wherein $C_m = (C_{min} + C_{max})/2$,
so that after a time period of $\Delta T$, the cache value of the ith video stream is greater than $C_{min}$; or

(c) when a current cache value Ci of the ith playback video stream meets $C_{min} < C_i < C_{max}$:
determining a current video playing speed, which is assumed to be $n*V_p$, and if the current pushing speed of the ith video stream $V_i$ meets $V_i = n*V_p$, maintaining the current pushing speed, and if $V_i \neq n*V_p$, adjusting the current pushing speed to $n*V_p$; or
(d) when a current cache value Ci of the ith playback video stream meets $C_{max} < C_i < C_{total}$:

assuming that a current playing speed is $n*V_p$, and that the current pushing speed of the ith video stream is $V_i$, adjusting the pushing speed at which the video surveillance platform pushes the ith playback video stream to:

$$V_i + [C_m - (V_i - n*V_p)*\Delta T - C_i]/\Delta T,$$

wherein $C_m = (C_{min} + C_{max})/2$,
so that after a time period of $\Delta T$, the cache value of the ith video stream is less than $C_{max}$; or

(e) when a current cache value $C_i$ of the ith playback video stream meets $C_i = C_{total}$:

suspending pushing of the ith video stream, wherein
Ctotai is a size of a buffer that is allocated for each playback video stream by each client in the observation group, $C_{max}$ is an upper alarm limit, $C_{min}$ is a lower alarm limit, and $0 < C_{min} < C_{max} < C_{total}$;
wherein, n is a natural number or a fraction;
and
pushing, by the video surveillance platform according to an adjusted pushing speed or adjusted pushing speeds, the one or more video streams to the clients for the clients to play (S108), wherein if a president of the observation group adjusts a playing speed of a client during a playing process of the client, the video play control unit of the video surveillance platform correspondingly adjusts a video stream playing speed of another client in the observation group, wherein the president has permission to control all synchronously played videos in the observation group to be uniformly played.

2. The method according to claim 1, wherein:
before the step of the separately pushing, by a video surveillance platform, one or more video streams of a same time period to multiple clients in an observation group, the method further comprises: creating, by the video play control unit of the video surveillance platform, the observation group for the multiple clients.

3. The method according to claim 2, wherein:

an initiator that creates the observation group is an administrator, the administrator selects a member in the observation group as the president, and another member is a secondary observer, wherein
the administrator has permission to add and delete a member of the observation group, select one or more videos that are to be observed, and allocate the selected one or more to-be-observed videos to each member;
the president has permission to control all synchronously-played videos in the observation group to be uniformly played; and
the secondary observer has permission to control video play on a local client.

4. The method according to claim 2, wherein:
each member in the observation group may set a following strategy for a synchronous-play process to "play first" or "synchronization first".

5. A video play control unit (26) of a video surveillance platform, comprising: a video stream pushing module (261), a receiving module (262), and a pushing speed adjusting module (263), wherein:

the video stream pushing module is configured to separately push one or more video streams of a same time period to multiple clients in an observation group;
the receiving module is configured to receive playing speeds at which the clients play the one or more video streams, and a cache value or cache values of the one or more video streams, wherein the playing speeds and the cache value or the cache values of the one or more video streams are sent by the multiple clients to the video play control unit regularly;
the pushing speed adjusting module is configured to adjust a pushing speed or pushing speeds of the one or more video streams according to the received playing speeds of the clients and the received cache value or cache values of the one or more video streams specifically:

(a) when a received cache value $C_i$ of the ith video stream in a cache of a client to which the ith video stream belongs is 0, notifying the other clients to stop playing, and stopping pushing another video stream other than the ith video stream, and
if a current playing speed of the client to which the ith video stream belongs is $n*V_p$, and a pushing speed of the ith video stream is $V_i$, adjusting the pushing speed of the ith video stream to:

$$V_i + C_{min} \div \Delta T,$$

so that after a time period of $\Delta T$, a cache value of the ith video stream is greater than $C_{min}$; or
(b) when a current cache value $C_i$ of the ith playback video stream meets $0 < C_i < C_{min}$:

assuming that a current playing speed is $n*V_p$, and that the current pushing speed of the ith video stream is $V_i$, adjusting the pushing speed at which the video surveillance platform pushes the ith playback video stream to:

$$V_i + [C_m - (V_i - n*V_p)*\Delta T - C_i]/\Delta T,$$

wherein $C_m = (C_{min} + C_{max})/2$,
so that after a time period of $\Delta T$, the cache value of the ith video stream is greater than $C_{min}$; or

(c) when a current cache value $C_i$ of the ith playback video stream meets $C_{min} < C_i < C_{max}$:
determining a current video playing speed, which is assumed to be $n*V_p$, and if the current pushing speed of the ith video stream $V_i$ meets $V_i = n*V_p$, maintaining the current pushing speed, and if $V_i \neq n*V_p$, adjusting the current pushing speed to $n*V_p$; or
(d) when a current cache value $C_i$ of the ith playback video stream meets $C_{max} < C_i < C_{total}$:

assuming that a current playing speed is $n*V_p$, and that the current pushing speed of the ith video stream is $V_i$, adjusting the pushing speed at which the video surveillance platform pushes the ith playback video stream to:

$$V_i + [C_m - (V_i - n*V_p)*\Delta T - C_i]/\Delta T,$$

wherein $C_m = (C_{min} + C_{max})/2$,
so that after a time period of $\Delta T$, the cache value of the ith video stream is less than $C_{max}$; or

(e) when a current cache value $C_i$ of the ith playback video stream meets $C_i = C_{total}$:

suspending pushing of the ith video stream, wherein
$C_{total}$ is a size of a buffer that is allocated for each playback video stream by each client in the observation group, $C_{max}$ is an upper alarm limit, $C_{min}$ is a lower alarm limit, and $0 < C_{min} < C_{max} < C_{total}$;
wherein, n is a natural number or a fraction; and wherein
the video stream pushing module is further configured to push, according to an adjusted pushing speed or adjusted pushing speeds, the one or more video streams to the clients for the clients to play, wherein if a president of the observation group adjusts a playing speed of a client during a playing process of the client, the video play control unit of the video surveillance platform correspondingly adjusts a video stream playing speed of another client in the observation group, wherein the president has permission to control all synchronously played videos in the observation group to be uniformly played.

6. The video play control unit according to claim 5, further comprising:
an invitation message sending module, configured to send an invitation message to a client to invite the client to join the observation group.

7. A video surveillance platform, comprising:

a video transceiver unit (20), configured to receive a video stream sent by a peripheral;
a video storage unit (24), configured to store the video stream received by the video transceiver unit; and
a video play control unit (26) according to any one of claims 5 to 6.

8. A video surveillance system, comprising:

a peripheral, configured to shoot a video, and transmit the video to a video surveillance platform;
a client device, configured to receive a video stream pushed by the video surveillance platform and play the video stream; and

the video surveillance platform according to claim 7.

**Patentansprüche**

1. Verfahren zum Steuern des Abspielens eines Videos, umfassend:

getrenntes Zuführen eines oder mehrerer Videostreams mit einer gleichen Zeitdauer von einer Videoüberwachungsplattform an mehrere Kunden in einer Betrachtergruppe (S102);
Empfangen von Abspielgeschwindigkeiten, mit denen die Kunden den einen oder die mehreren Videostreams abspielen, und eines Cache-Werts oder von Cache-Werten des einen oder der mehreren Videostreams, wobei die Abspielgeschwindigkeiten und der Cache-Wert oder die Cache-Werte des einen oder der mehreren Videostreams von den mehreren Kunden regelmäßig an eine Videoabspielsteuereinheit der Videoüberwachungsplattform gesendet werden (S104);
Abgleichen durch die Videoabspielsteuereinheit der Videoüberwachungsplattform einer Zuführgeschwindigkeit oder von Zuführgeschwindigkeiten des einen oder der mehreren Videostreams gemäß den empfangenen Abspielgeschwindigkeiten der Kunden und gemäß dem empfangenen Cache-Wert oder den empfangenen Cache-Werten des einen oder der mehreren Videostreams (S106);
insbesondere:

(a) wenn ein empfangener Cache-Wert Ci des i-ten Videostreams in einem Cachespeicher eines Kunden, zu dem der i-te Videostream gehört, 0 ist, Benachrichtigen der anderen Kunden, dass sie das Abspielen unterbrechen, und Unterbrechen des Zuführens eines anderen Videostreams mit der Ausnahme des i-ten Videostreams, und
wenn eine aktuelle Abspielgeschwindigkeit des Kunden, zu dem der i-te Videostream gehört, $n * V_p$ ist, und eine Zuführgeschwindigkeit des i-ten Videostreams $V_i$ ist, Abgleichen der Zuführgeschwindigkeit des i-ten Videostreams auf:

$$V_i + C_{min} \div \Delta T,$$

sodass nach einer Zeitdauer von $\Delta T$ ein Cache-Wert des i-ten Videostreams größer als $C_{min}$ ist; oder
(b) wenn ein aktueller Cache-Wert $C_i$ des i-ten Wiedergabe-Videostreams $0 < C_i < C_{min}$ erfüllt:

unter der Annahme, dass eine aktuelle Abspielgeschwindigkeit $n * V_p$ ist und dass die aktuelle Zuführgeschwindigkeit des i-ten Videostreams $V_i$ ist, Abgleichen der Zuführgeschwindigkeit, mit der die Videoüberwachungsplattform den i-ten Wiedergabe-Videostream zuführt, auf:

$$V_i + [C_m - (V_i - n * V_p) * \Delta T - C_i] / \Delta T,$$

wobei $C_m = (C_{min} + C_{max}) / 2$ ist,
sodass nach einer Zeitdauer von $\Delta T$ der Cache-Wert des i-ten Videostreams größer als $C_{min}$ ist; oder

(c) wenn ein aktueller Cache-Wert $C_i$ des i-ten Wiedergabe-Videostreams $C_{min} < C_i < C_{max}$ erfüllt:
Ermitteln einer aktuellen Videoabspielgeschwindigkeit, von der angenommen wird, dass sie $n * V_p$ ist, und wenn die aktuelle Zuführgeschwindigkeit des i-ten Videostreams $V_i$ $V_i = n * V_p$ erfüllt, Beibehalten der aktuellen Zuführgeschwindigkeit, und wenn $V_i \neq n * V_p$ ist, Abgleichen der aktuellen Zuführgeschwindigkeit auf $n * V_p$; oder
(d) wenn ein aktueller Cache-Wert Ci des i-ten Wiedergabe-Videostreams $C_{max} < C_i < C_{total}$ erfüllt:

unter der Annahme, dass eine aktuelle Abspielgeschwindigkeit $n * V_p$ ist und dass die aktuelle Zuführgeschwindigkeit des i-ten Videostreams $V_i$ ist, Abgleichen der Zuführgeschwindigkeit, mit der die Videoüberwachungsplattform den i-ten Wiedergabe-Videostream zuführt, auf:

$$V_i + [C_m - (V_i - n * V_p) * \Delta T - C_i] / \Delta T,$$

wobei $C_m = (C_{min} + C_{max}) / 2$ ist,
sodass nach einer Zeitdauer von $\Delta T$ der Cache-Wert des i-ten Videostreams kleiner als $C_{max}$ ist; oder

(e) wenn ein aktueller Cache-Wert Ci des i-ten Wiedergabe-Videostreams $C_i = C_{total}$ erfüllt:

zeitweiliges Unterbrechen des Zuführens des i-ten Videostreams, wobei $C_{total}$ eine Größe eines Pufferspeichers ist, der für jeden Wiedergabe-Videostream durch jeden Kunden in der Betrachtergruppe zugewiesen wird, $C_{max}$ eine obere Alarmgrenze ist, $C_{min}$ eine untere Alarmgrenze ist und $0 < C_{min} < C_{max} < C_{total}$ ist;
wobei n eine natürliche Zahl oder eine Bruchzahl ist; und

Zuführen durch die Videoüberwachungsplattform gemäß einer abgeglichenen Zuführgeschwindigkeit oder gemäß abgeglichenen Zuführgeschwindigkeiten des einen oder der mehreren Videostreams an die Kunden, damit die Kunden diese abspielen (S108), wobei, wenn ein Präsident der Betrachtergruppe eine Abspielgeschwindigkeit eines Kunden während eines Abspielprozesses des Kunden abgleicht, die Videoabspielsteuereinheit der Videoüberwachungsplattform eine Videostreamabspielgeschwindigkeit eines anderen Kunden in der Betrachtergruppe entsprechend abgleicht, wobei der Präsident die Erlaubnis besitzt, alle synchron abgespielten Videos in der Betrachtergruppe so zu steuern, dass sie gleichförmig abgespielt werden.

2. Verfahren nach Anspruch 1, wobei:
das Verfahren, vor dem Schritt des getrennten Zuführens eines oder mehrerer Videostreams mit einer gleichen Zeitdauer von einer Videoüberwachungsplattform an mehrere Kunden in einer Betrachtergruppe, außerdem umfasst: Erzeugen durch die Videoabspielsteuereinheit der Videoüberwachungsplattform der Betrachtergruppe für die mehreren Kunden.

3. Verfahren nach Anspruch 2, wobei:
ein Initiator, der die Betrachtergruppe erzeugt, ein Administrator ist, wobei der Administrator ein Mitglied in der Betrachtergruppe als Präsident auswählt und ein anderes Mitglied ein Sekundärbeobachter ist, wobei:

der Administrator die Erlaubnis besitzt zum Hinzufügen und Löschen eines Mitglieds der Betrachtergruppe, Auswählen eines oder mehrerer Videos, die zu betrachten sind, und Zuweisen des ausgewählten oder der mehreren ausgewählten zu betrachtenden Videos an jedes Mitglied,
der Präsident die Erlaubnis besitzt, alle synchron abgespielten Videos in der Betrachtergruppe so zu steuern, dass sie gleichförmig abgespielt werden; und
der Sekundärbeobachter die Erlaubnis besitzt, das Abspielen des Videos auf einem lokalen Client zu steuern.

4. Verfahren nach Anspruch 2, wobei:
jedes Mitglied der Betrachtergruppe eine folgende Strategie für einen synchronen Abspielprozess auf "zuerst Abspielen" oder "zuerst Synchronisieren" einstellen kann.

5. Videoabspielsteuereinheit (26) einer Videoüberwachungsplattform, umfassend: ein Videostreamzuführmodul (261), ein Empfangsmodul (262) und ein Zuführgeschwindigkeitsabgleichmodul (263), wobei
das Videostreamzuführmodul konfiguriert ist zum getrennten Zuführen eines oder mehrerer Videostreams mit einer gleichen Zeitdauer an mehrere Kunden in einer Betrachtergruppe;
das Empfangsmodul konfiguriert ist zum Empfangen von Abspielgeschwindigkeiten, mit denen die Kunden den einen oder die mehreren Videostreams abspielen und eines Cache-Werts oder von Cache-Werten des einen oder der mehreren Videostreams, wobei die Abspielgeschwindigkeiten und der Cache-Wert oder die Cache-Werte des einen oder der mehreren Videostreams von den mehreren Kunden regelmäßig an die Videoabspielsteuereinheit gesendet werden;
wobei das Zuführgeschwindigkeitsabgleichmodul konfiguriert ist zum Abgleichen einer Zuführgeschwindigkeit oder von Zuführgeschwindigkeiten des einen oder der mehreren Videostreams gemäß den empfangenen Abspielgeschwindigkeiten der Kunden und gemäß dem empfangenen Cache-Wert oder den empfangenen Cache-Werten des einen oder der mehreren Videostreams insbesondere:

(a) wenn ein empfangener Cache-Wert Ci des i-ten Videostreams in einem Cachespeicher eines Kunden, zu dem der i-te Videostream gehört, 0 ist, Benachrichtigen der anderen Kunden, dass sie das Abspielen unterbrechen, und Unterbrechen des Zuführens eines anderen Videostreams mit der Ausnahme des i-ten Videostreams, und

wenn eine aktuelle Abspielgeschwindigkeit des Kunden, zu dem der i-te Videostream gehört, $n * V_p$ ist, und eine Zuführgeschwindigkeit des i-ten Videostreams $V_i$ ist, Abgleichen der Zuführgeschwindigkeit des i-ten Videostreams auf:

$$V_i + C_{min} \div \Delta T,$$

sodass nach einer Zeitdauer von $\Delta T$ ein Cache-Wert des i-ten Videostreams größer als $C_{min}$ ist; oder
(b) wenn ein aktueller Cache-Wert Ci des i-ten Wiedergabe-Videostreams $0 < C_i < C_{min}$ erfüllt:

unter der Annahme, dass eine aktuelle Abspielgeschwindigkeit $n * V_p$ ist und dass die aktuelle Zuführgeschwindigkeit des i-ten Videostreams $V_i$ ist, Abgleichen der Zuführgeschwindigkeit, mit der die Videoüberwachungsplattform den i-ten Wiedergabe-Videostream zuführt, auf:

$$V_i + [C_m - (V_i - n * V_p) * \Delta T - C_i] / \Delta T, \text{'}$$

wobei $C_m = (C_{min} + C_{max}) / 2$ ist,
sodass nach einer Zeitdauer von $\Delta T$ der Cache-Wert des i-ten Videostreams größer als $C_{min}$ ist; oder

(c) wenn ein aktueller Cache-Wert Ci des i-ten Wiedergabe-Videostreams $C_{min} < C_i < C_{max}$ erfüllt:
Ermitteln einer aktuellen Videoabspielgeschwindigkeit, von der angenommen wird, dass sie $n * V_p$ ist, und wenn die aktuelle Zuführgeschwindigkeit des i-ten Videostreams $V_i$ $V_i = n * V_p$ erfüllt, Beibehalten der aktuellen Zuführgeschwindigkeit, und wenn $V_i \neq n * V_p$ ist, Abgleichen der aktuellen Zuführgeschwindigkeit auf $n * V_p$; oder
(d) wenn ein aktueller Cache-Wert $C_i$ des i-ten Wiedergabe-Videostreams $C_{max} < C_i < C_{total}$ erfüllt:

unter der Annahme, dass eine aktuelle Abspielgeschwindigkeit $n * V_p$ ist und dass die aktuelle Zuführgeschwindigkeit des i-ten Videostreams $V_i$ ist, Abgleichen der Zuführgeschwindigkeit, mit der die Videoüberwachungsplattform den i-ten Wiedergabe-Videostream zuführt, auf:

$$V_i + [C_m - (V_i - n * V_p) * \Delta T - C_i] / \Delta T,$$

wobei $C_m = (C_{min} + C_{max}) / 2$ ist,
sodass nach einer Zeitdauer von $\Delta T$ der Cache-Wert des i-ten Videostreams kleiner als $C_{max}$ ist; oder

(e) wenn ein aktueller Cache-Wert $C_i$ des i-ten Wiedergabe-Videostreams $C_i = C_{total}$ erfüllt:

zeitweiliges Unterbrechen des Zuführens des i-ten Videostreams, wobei $C_{total}$ eine Größe eines Pufferspeichers ist, der für jeden Wiedergabe-Videostream durch jeden Kunden in der Betrachtergruppe zugewiesen wird, $C_{max}$ eine obere Alarmgrenze ist, $C_{min}$ eine untere Alarmgrenze ist und $0 < C_{min} < C_{max} < C_{total}$ ist;
wobei n eine natürliche Zahl oder eine Bruchzahl ist; und

wobei das Videostreamzuführmodul außerdem konfiguriert ist zum Zuführen, gemäß einer abgeglichenen Zuführgeschwindigkeit oder gemäß abgeglichenen Zuführgeschwindigkeiten, des einen oder der mehreren Videostreams an die Kunden, damit die Kunden diese abspielen, wobei, wenn ein Präsident der Betrachtergruppe eine Abspielgeschwindigkeit eines Kunden während eines Abspielprozesses des Kunden abgleicht, die Videoabspielsteuereinheit der Videoüberwachungsplattform eine Videostreamabspielgeschwindigkeit eines anderen Kunden in der Betrachtergruppe entsprechend abgleicht, wobei der Präsident die Erlaubnis besitzt, alle synchron abgespielten Videos in der Betrachtergruppe so zu steuern, dass sie gleichförmig abgespielt werden.

6. Videoabspielsteuereinheit nach Anspruch 5, die außerdem umfasst:
ein Sendemodul für Einladungsnachrichten, das konfiguriert ist zum Senden einer Einladungsnachricht an einen Kunden, um den Kunden einzuladen, sich der Betrachtergruppe anzuschließen.

7. Videoüberwachungsplattform, umfassend:

eine Video-Transceiver-Einheit (20), die konfiguriert ist, um einen Videostream zu empfangen, der von einem Peripheriegerät gesendet wird;
eine Videospeichereinheit (24), die konfiguriert ist, um den Videostream zu speichern, der von der Video-Transceiver-Einheit empfangen wird; und
eine Videoabspielsteuereinheit (26) nach einem der Ansprüche 5 bis 6.

**8.** Videoüberwachungssystem, umfassend:

ein Peripheriegerät, das konfiguriert ist, um ein Video aufzunehmen und das Video an eine Videoüberwachungsplattform zu übertragen;
eine Client-Vorrichtung, die konfiguriert ist, um einen Videostream zu empfangen, der von der Videoüberwachungsplattform zugeführt wird, und den Videostream abzuspielen; und
die Videoüberwachungsplattform nach Anspruch 7.

**Revendications**

**1.** Procédé de commande de jeux vidéo, consistant à :

pousser séparément, par une plate-forme de surveillance vidéo, un ou plusieurs flux vidéo d'une même période de temps vers de multiples clients dans un groupe d'observation (S102) ;
recevoir des vitesses de lecture auxquelles les clients lisent l'un ou les plusieurs flux vidéo, et une valeur de cache ou des valeurs de cache de l'un ou des plusieurs flux vidéo, les vitesses de lecture et la valeur de cache ou les valeurs de cache de l'un ou des plusieurs flux vidéo étant envoyées régulièrement par les multiples clients à une unité de commande de lecture de vidéos de la plate-forme de surveillance vidéo (S104) ;
régler, par l'unité de commande de lecture vidéo de la plate-forme de surveillance vidéo, une vitesse de poussée ou des vitesses de poussée de l'un ou des plusieurs flux vidéo en fonction des vitesses de lecture reçues des clients et de la valeur de cache reçue ou des valeurs de cache reçues de l'un ou des plusieurs flux vidéo (S106) ;
spécifiquement :

(a) lorsqu'une valeur de cache Ci reçue du $i^{ème}$ flux vidéo dans un cache d'un client auquel appartient le $i^{ème}$ flux vidéo est 0, notifier aux autres clients d'arrêter la lecture, et arrêter la poussée d'un autre flux vidéo autre que le $i^{ème}$ flux vidéo, et
si une vitesse de lecture actuelle du client auquel appartient le $i^{ème}$ flux vidéo est $n*V_p$, et si une vitesse de poussée du $i^{ème}$ flux vidéo est Vi, régler la vitesse de poussée du $i^{ème}$ flux vidéo sur :

$$V_i + C_{min} \div \Delta T,$$

de sorte qu'après une période de temps de $\Delta T$, une valeur de cache du $i^{ème}$ flux vidéo est supérieure à $C_{min}$ ; ou
(b) lorsqu'une valeur de cache Ci actuelle du $i^{ème}$ flux vidéo de lecture satisfait $0<C_i<C_{min}$ :

supposer qu'une vitesse de lecture actuelle est $n*V_p$, et que la vitesse de poussée actuelle du $i^{ème}$ flux vidéo est $V_i$, régler la vitesse de poussée à laquelle la plate-forme de surveillance vidéo pousse le $i^{ème}$ flux vidéo de lecture sur :

$$V_i+[C_m-(V_i-n*V_p)*\Delta T-C_i]/\Delta T,$$

dans lequel $C_m=(C_{min}+C_{max})/2$,
de sorte qu'après une période de temps de $\Delta T$, la valeur de cache du $i^{ème}$ flux vidéo est supérieure à $C_{min}$ ; ou

(c) lorsqu'une valeur de cache Ci actuelle du $i^{ème}$ flux vidéo de lecture satisfait $C_{min}<C_i<C_{max}$ :
déterminer une vitesse de lecture de vidéo actuelle, qui est supposée être $n*V_p$, et si la vitesse de poussée actuelle du $i^{ème}$ flux vidéo $V_i$ satisfait $V_i = n*V_p$, conserver la vitesse de poussée actuelle, et si $V_i \neq n*V_p$,

régler la vitesse de poussée actuelle sur n*V$_p$ ; ou

(d) lorsqu'une valeur de cache actuelle C$_i$ du i$^{ème}$ flux vidéo de lecture satisfait C$_{max}$<C$_i$<C$_{total}$ :

supposer qu'une vitesse de lecture actuelle est n*V$_p$, et que la vitesse de poussée actuelle du i$^{ème}$ flux vidéo est V$_i$, régler la vitesse de poussée à laquelle la plate-forme de surveillance vidéo pousse le i$^{ème}$ flux vidéo de lecture sur :

$$V_i+[C_m-(V_i-n*V_p)*\Delta T-C_i]/\Delta T,$$

dans lequel C$_m$=(C$_{min}$+C$_{max}$)/2,
de sorte qu'après une période de temps de $\Delta T$, la valeur de cache du i$^{ème}$ flux vidéo est inférieure à C$_{max}$ ; ou

(e) lorsqu'une valeur de cache C$_i$ actuelle du i$^{ème}$ flux vidéo de lecture satisfait C$_i$ = C$_{total}$ :

suspendre la poussée du i$^{ème}$ flux vidéo, dans lequel
C$_{total}$ est une taille d'une mémoire tampon qui est attribuée à chaque flux vidéo de lecture par chaque client dans le groupe d'observation, C$_{max}$ est une limite d'alarme supérieure, C$_{min}$ est une limite d'alarme inférieure, et 0<C$_{min}$<C$_{max}$<C$_{total}$;
dans lequel, n est un nombre naturel ou une fraction ;
et
pousser, par la plate-forme de surveillance vidéo en fonction d'une vitesse de poussée réglée ou des vitesses de poussée réglées, le ou les plusieurs flux vidéo vers les clients pour que les clients les lisent (S108), dans lequel si un président du groupe d'observation règle une vitesse de lecture d'un client pendant un processus de lecture du client, l'unité de commande de lecture vidéo de la plate-forme de surveillance vidéo règle de manière correspondante une vitesse de lecture de flux vidéo d'un autre client dans le groupe d'observation, dans lequel le président a la permission de commander toutes les vidéos lues de manière synchrone dans le groupe d'observation devant être lues uniformément.

2. Procédé selon la revendication 1, dans lequel :
avant l'étape consistant à pousser séparément, par une plate-forme de surveillance vidéo, un ou plusieurs flux vidéo d'une même période de temps vers de multiples clients dans un groupe d'observation, le procédé consiste en outre à : créer, par l'unité de commande de lecture vidéo de la plate-forme de surveillance vidéo, le groupe d'observation pour les multiples clients.

3. Procédé selon la revendication 2, dans lequel :

un initiateur qui créé le groupe d'observation est un administrateur, l'administrateur sélectionne un membre dans le groupe d'observation en tant que président, et un autre membre est un observateur secondaire, dans lequel
l'administrateur a la permission d'ajouter et de supprimer un membre du groupe d'observation, de sélectionner une ou plusieurs vidéos qui doivent être visionnées, et d'attribuer la vidéo ou les vidéos sélectionnées à visionner à chaque membre ;
le président a la permission de commander toutes les vidéos lues de manière synchrone dans le groupe d'observation devant être lues uniformément ; et
l'observateur secondaire a la permission de commander une lecture de vidéo sur un client local.

4. Procédé selon la revendication 2, dans lequel :
chaque membre dans le groupe d'observation peut fixer une stratégie suivante pour un processus de lecture synchrone consistant à « lire en premier » ou à « une synchronisation en premier ».

5. Unité de commande de lecture vidéo (26) d'une plate-forme de surveillance vidéo, comprenant : un module de poussée de flux vidéo (261), un module de réception (262) et un module de réglage de vitesse de poussée (263), dans laquelle :

le module de poussée de flux vidéo est conçu pour pousser séparément un ou plusieurs flux vidéo d'une même période de temps vers de multiples clients dans un groupe d'observation ;

le module de réception est conçu pour recevoir des vitesses de lecture auxquelles les clients lisent l'un ou les plusieurs flux vidéo, et une valeur de cache ou des valeurs de cache de l'un ou des plusieurs flux vidéo, les vitesses de lecture et la valeur de cache ou les valeurs de cache de l'un ou des plusieurs flux vidéo étant envoyées régulièrement par les multiples clients à l'unité de commande de lecture de vidéos ;

le module de réglage de vitesse de poussée est conçu pour régler une vitesse de poussée ou des vitesses de poussée de l'un ou des plusieurs flux vidéo en fonction des vitesses de lecture reçues des clients et de la valeur de cache reçue ou des valeurs de cache reçues de l'un ou des plusieurs flux vidéo spécifiquement :

(a) lorsqu'une valeur de cache $C_i$ reçue du $i^{ème}$ flux vidéo dans un cache d'un client auquel appartient le $i^{ème}$ flux vidéo est 0, notifier aux autres clients d'arrêter la lecture, et arrêter la poussée d'un autre flux vidéo autre que le $i^{ème}$ flux vidéo, et

si une vitesse de lecture actuelle du client auquel appartient le $i^{ème}$ flux vidéo est $n*V_p$, et si une vitesse de poussée du $i^{ème}$ flux vidéo est $V_i$, régler la vitesse de poussée du $i^{ème}$ flux vidéo sur :

$$V_i + C_{min} \div \Delta T,$$

de sorte qu'après une période de temps de $\Delta T$, une valeur de cache du $i^{ème}$ flux vidéo est supérieure à $C_{min}$ ; ou

(b) lorsqu'une valeur de cache $C_i$ actuelle du $i^{ème}$ flux vidéo de lecture satisfait $0 < C_i < C_{min}$ :

supposer qu'une vitesse de lecture actuelle est $n*V_p$, et que la vitesse de poussée actuelle du $i^{ème}$ flux vidéo est $V_i$, régler la vitesse de poussée à laquelle la plate-forme de surveillance vidéo pousse le $i^{ème}$ flux vidéo de lecture sur :

$$V_i + [C_m - (V_i - n*V_p)*\Delta T - C_i]/\Delta T,$$

dans laquelle $C_m = (C_{min} + C_{max})/2$,

de sorte qu'après une période de temps de $\Delta T$, la valeur de cache du $i^{ème}$ flux vidéo est supérieure à $C_{min}$ ; ou

(c) lorsqu'une valeur de cache $C_i$ actuelle du $i^{ème}$ flux vidéo de lecture satisfait $C_{min} < C_i < C_{max}$ :

déterminer une vitesse de lecture de vidéo actuelle, qui est supposée être $n*V_p$, et si la vitesse de poussée actuelle du $i^{ème}$ flux vidéo $V_i$ satisfait $V_i = n*V_p$, conserver la vitesse de poussée actuelle, et si $V_i \neq n*V_p$, régler la vitesse de poussée actuelle sur $n*V_p$ ; ou

(d) lorsqu'une valeur de cache actuelle Ci du $i^{ème}$ flux vidéo de lecture satisfait $C_{max} < C_i < C_{total}$ :

supposer qu'une vitesse de lecture actuelle est $n*V_p$, et que la vitesse de poussée actuelle du $i^{ème}$ flux vidéo est $V_i$, régler la vitesse de poussée à laquelle la plate-forme de surveillance vidéo pousse le $i^{ème}$ flux vidéo de lecture sur :

$$V_i + [C_m - (V_i - n*V_p)*\Delta T - C_i]/\Delta T,$$

dans laquelle $C_m = (C_{min} + C_{max})/2$,

de sorte qu'après une période de temps de $\Delta T$, la valeur de cache du $i^{ème}$ flux vidéo est inférieure à $C_{max}$ ; ou

(e) lorsqu'une valeur de cache $C_i$ actuelle du $i^{ème}$ flux vidéo de lecture satisfait $C_i = C_{total}$ :

suspendre la poussée du $i^{ème}$ flux vidéo, dans laquelle

$C_{total}$ est une taille d'une mémoire tampon qui est attribuée à chaque flux vidéo de lecture par chaque client dans le groupe d'observation, $C_{max}$ est une limite d'alarme supérieure, $C_{min}$ est une limite d'alarme inférieure, et $0 < C_{min} < C_{max} < C_{total}$ ;

dans laquelle, n est un nombre naturel ou une fraction ; et dans laquelle

le module de poussée de flux vidéo est conçu en outre pour pousser, en fonction d'une vitesse de poussée réglée ou des vitesses de poussée réglées, le ou les plusieurs flux vidéo vers les clients pour que les clients les lisent, dans laquelle si un président du groupe d'observation règle une vitesse de lecture d'un client pendant un processus de lecture du client, l'unité de commande de lecture vidéo de la plate-forme de surveillance vidéo règle de manière correspondante une vitesse de lecture de flux vidéo d'un autre client dans le groupe d'observation, dans lequel le président a la permission de commander toutes les vidéos lues de manière synchrone dans le groupe d'observation devant être lues uniformément.

6. Unité de commande de lecture vidéo selon la revendication 5, comprenant en outre :
un module d'envoi d'un message d'invitation, conçu pour envoyer un message d'invitation à un client pour inviter le client à rejoindre le groupe d'observation.

7. Plate-forme de surveillance vidéo, comprenant :

une unité d'émetteur-récepteur vidéo (20), conçue pour recevoir un flux vidéo envoyé par un périphérique ;
une unité de stockage vidéo (24), conçue pour stocker le flux vidéo reçu par l'unité d'émetteur-récepteur vidéo ; et
une unité de commande de lecture vidéo (26) selon l'une quelconque des revendications 5 et 6.

8. Système de surveillance vidéo, comprenant :

un périphérique, conçu pour tourner une vidéo, et transmettre la vidéo à une plate-forme de surveillance vidéo ;
un dispositif client, conçu pour recevoir un flux vidéo poussé par la plate-forme de surveillance vidéo et lire le flux vidéo ; et
la plate-forme de surveillance vidéo selon la revendication 7.

30

20

10

| Peripheral | | Video surveillance platform | | Client |

FIG. 1

26

FIG. 2

A video surveillance platform separately pushes one or more video streams of a same time period to multiple clients in an observation group — S102

Receive receiving speeds at which the clients receive the one or more video streams, and a cache value or cache values of the one or more video streams, where the receiving speeds and the cache value or the cache values of the one or more video streams are sent by the multiple clients to a video play control unit of the video surveillance platform regularly — S104

The video play control unit of the video surveillance platform adjusts a pushing speed or pushing speeds of the one or more video streams according to the received receiving speeds of the clients and the received cache value or cache values of the one or more video streams — S106

The video surveillance platform pushes, according to an adjusted pushing speed or adjusted pushing speeds, the one or more video streams to the clients for the clients to play — S108

FIG. 3

Client list

Refresh | Enter an address of a client | Filter

⊕ ▼ □ Root (online X/total X)

□ Client XXX

□ Client XXX

□ Client XXX

□ Client XXX

Including a list of options
such as Select All, Cancel
All, Confirm, and Cancel

Options

FIG. 4a

List of members in an observation group

⊕ ▼ Root (total X)

Client XXX

Client XXX

An observation group is successfully created,
and altogether XX members join the group

including options such as
Allocate a Video and Invite a
Client to Join the Group

Options

FIG. 4b

FIG. 5

| Client 1 | | Client 2 | . . . | Client N |
|---|---|---|---|---|

Broadcast a message
of creating an
observation group

Broadcast a message
of creating an
observation group

Join the observation
group and feed back
media capabilities

Join the observation
group and feed back
media capabilities

Respond

Respond

FIG. 6

| Video surveillance platform | Client 1 | Client 2 | . . . | Client N |
|---|---|---|---|---|

Create an observation group

Broadcast a message of creating an observation group

Broadcast a message of creating an observation group

Join the observation group and feed back media capabilities

Join the observation group and feed back media capabilities

Respond

Respond

FIG. 7

FIG. 8

```
┌──────────────┐      ┌──────────────┐      ┌──────────────┐         ┌──────────────┐
│    Video     │      │              │      │  Secondary   │         │  Secondary   │
│ surveillance │      │  President   │      │  observer 1  │  · · ·  │  observer N  │
│   platform   │      │              │      │              │         │              │
└──────────────┘      └──────────────┘      └──────────────┘         └──────────────┘
```

Request to suspend

Respond to suspension

Suspend play and
display a message

Suspend play and
display a message

Request to resume play

Respond to play
resumption

Resume play and
display a message

Resume play and
display a message

FIG. 9

| Video surveillance platform | President | Secondary observer 1 | . . . | Secondary observer N |
|---|---|---|---|---|

Request to suspend

Respond to suspension

Suspend play and display a message

Suspend play and display a message

Request to resume play

Request to resume play

Respond to play resumption

Resume play and display a message

Resume play and display a message

FIG. 10

| Video surveillance platform | President | Secondary observer 1 | ... | Secondary observer N |
|---|---|---|---|---|
| Request to suspend | | | | |
| Respond to suspension | | | | |
| Display a suspension message | | | | |
| Display a suspension message | | | | |
| Request to resume play | | | | |
| Respond to play resumption | | | | |
| Display a resumption message | | | | |
| Display a resumption message | | | | |

FIG. 11

| Video surveillance platform | President | Secondary observer 1 | ... | Secondary observer N |
|---|---|---|---|---|

Request to suspend

Respond to suspension

Display a suspension message

Display a suspension message

Request to resume play

Respond to play resumption

Display a resumption message

Display a resumption message

FIG. 12

FIG. 13